# EUROPEAN PATENT SPECIFICATION

(11) **EP 2 749 768 B1**
(45) Date of publication and mention of the grant of the patent: **20.04.2016**
(21) Application number: 13199742.1
(22) Date of filing: 30.12.2013
(51) Int. Cl.: F04B 1/04, F04B 1/053, F03C 1/053

(54) **Radial piston hydraulic machine and wind turbine generator**
Radialkolbenhydraulikmaschine und Windturbinengenerator
Machine hydraulique à pistons radiaux et générateur de turbine éolienne

(30) Priority: 28.12.2012 JP 2012288340
(43) Date of publication of application: 02.07.2014
(73) Proprietor: MITSUBISHI HEAVY INDUSTRIES, LTD., Tokyo 108-8215 (JP)
(72) Inventor: Osaka, Hiromi, TOKYO, 108-8215 (JP); Takeda, Katsuhiko, TOKYO, 108-8215 (JP); Hara, Takeshi, TOKYO, 108-8215 (JP); Sonobe, Hiroyuki, TOKYO, 108-8215 (JP); Sato, Makoto, TOKYO, 108-8215 (JP)
(74) Representative: Intès, Didier Gérard André

(56) References cited:
- EP-A1- 1 293 667
- WO-A1-00/53925
- WO-A1-2010/079011
- WO-A2-2011/104544
- GB-A- 1 176 621
- US-A- 2 337 427

## Description

### [Technical Field]

The present disclosure relates to a hydraulic machine of a radial piston type and a wind turbine generator including the same.

### [Background Art]

A hydraulic machine of a radial piston type with a plurality of pistons radially disposed has been known.

For instance, a radial piston hydraulic pump using a power transmission device is disclosed in Patent Document 1. This hydraulic pump is provided with an outer race having a cam face on an inner peripheral surface and an inner race having a plurality
of cylinders arranged radially to face the outer race. The plurality of cylinders of the inner race is configured to guide a plurality of pistons, respectively. Each of the pistons has a ball contacting the cam face.

Patent Document 2 discloses a radial piston hydraulic machine which serves as a drive train for a wind turbine generator. The radial piston hydraulic machine described in Patent Document 2 is provided with a piston which is reciprocable in a cylinder, a roller attached to the piston and a cam having a cam face contacting the roller.

### [Citation List]

### [Patent Literature]

### [Patent Document 1]

JP2010-19192A

### [Patent Document 2]

US2010/0040470A

### SUMMARY

### [Technical Problem]

In a common hydraulic machine of a radial piston type, a reciprocating motion of pistons which accompanies cyclic volume change of hydraulic chambers formed by the pistons and cylinders is convertible into a rotational motion of a machine element such as a cam or a crankpin, and vice versa. On this occasion, a torsion moment is applied to the cylinder block caused by a side force transmitted from the machine element via the pistons and the cylinders. Thus, it is desirable to secure strength(stiffness) of the cylinder block so as to withstand the torsion moment.

In this respect, Patent Documents 1 and 2 do not describe a measure to secure sufficient strength of the cylinder block with respect to the torsion moment while suppressing increase in size of the cylinder block.

WO 00/53925 discloses another prior an hydraulic machine.

An object of at least one embodiment of the present invention is to provide a hydraulic machine of a radial piston type and a wind turbine generator having a cylinder block with excellent strength(stiffness).

### [Solution to Problem]

A hydraulic machine of a radial piston type according to a least one embodiment of the present invention includes:
N pistons arranged along a radial direction of the hydraulic machine; and
a cylinder block comprising N cylinders each of which is configured to guide each of the N pistons reciprocatably along the radial direction,
wherein the N cylinders are arranged in the cylinder block in accordance with such an arrangement that, with respect to a virtual arrangement where n virtual cylinder rows are arranged in a circumferential direction of the hydraulic machine and each of the n virtual cylinder rows is formed by m virtual cylinders arranged in an axial direction of the hydraulic machine, at least one of the m virtual cylinders belonging to each of the n virtual cylinder rows is shifted in the circumferential direction, m being an integer not less than two, n being an integer not less than two, and N being N = m × n.

In the above hydraulic machine of a radial piston type, at least one of the cylinders belonging to at least one cylinder row formed by m cylinders arranged in an axial direction is disposed at a position in a circumferential direction of the hydraulic machine (referred to as "a circumferential position" hereafter) different from other cylinders belonging to the same cylinder row. As a result, it is easier to secure the distance between adjacent two of the cylinders while suppressing the size increase of the hydraulic machine in the axial direction. Accordingly, it is possible to obtain sufficient strength of the cylinder block with respect to the torsion moment caused by the side force transmitted from the machine element via the pistons and the cylinders, for instance.

The above hydraulic machine of a radial piston type further includes:
a ring cam having a plurality of lobes disposed along the circumferential direction, the plurality of lobes being arranged to face the N pistons, the ring cam being configured rotatable so that the lobes move relative to the N pistons in the circumferential direction,
wherein each of the plurality of lobes extends linearly in the axial direction over a distribution range of the N cylinders in the axial direction.

The lobes of a ring cam which extend linearly in the axial direction of the hydraulic machine can be easily processed using a surface grinder.

In the above hydraulic machine of a radial piston type, at least one of the cylinders belonging to at least one cylinder row is disposed at a circumferential position different from other cylinders belonging to the same cylinder row. As a result, even in the case where the plurality of lobes of the ring cam extends linearly in the axial direction, the plurality of pistons of the same cylinder row can have phase differences between one another. Accordingly, it is possible to suppress pulsation and vibration of the hydraulic machine using the above described ring cam which can be easily processed.

In one embodiment, the N cylinders in the cylinder block are arranged in accordance with such an arrangement that the m virtual cylinders belonging to each of the virtual cylinder rows are alternately displaced in the circumferential direction by P/2 in a staggered fashion, P being a distance in the circumferential direction between adjacent two of the virtual cylinder rows.

In this manner, in a cylinder row formed by m cylinders arranged in the axial direction, the circumferential positions of adjacent two of the cylinders are varied by P/2. As a result, it is even easier to secure the distance between adjacent two of the cylinders while suppressing the size increase of the hydraulic machine in the axial direction. Accordingly, it is possible to further improve strength of the cylinder block.

In another embodiment, the N cylinders in the cylinder block are arranged in accordance with such an arrangement that circumferential positions of the m virtual cylinders belonging to each of the virtual cylinder rows are varied from one another.

In this case, as the circumferential positions of the m cylinders belonging to each of the cylinder rows arranged along the axial direction are varied from one another, the plurality of pistons in the same cylinder row can have phase differences between one another. As a result, even in the case where the plurality of lobes of the ring cam extends linearly along the axial direction, it is possible to effectively suppress pulsation and vibration of the hydraulic machine.

In one embodiment, the N cylinders in the cylinder block are arranged in accordance with such an arrangement that a i^{th} virtual cylinder from an endmost cylinder in the axial direction among the m virtual cylinders belonging to each of the virtual cylinder rows is arranged with a distance P/2 in the circumferential direction from one of a (i-1)^{th} virtual cylinder or a (i+1)^{th} virtual cylinder that is disposed adjacent to the i^{th} virtual cylinder and with a distance smaller than P/2 from the other of the (i-1)^{th} virtual cylinder or the (i+1)^{th} virtual cylinder, P being a distance in the circumferential direction between adjacent two of the virtual cylinder rows. For instance, the distance in the circumferential direction between the i^{th} virtual cylinder and the other of the (i-1)^{th} virtual cylinder or the (i+1)^{th} virtual cylinder is (P/2-P/m) in such a case that m is an even number and is (P/2-P/(m+1)) in such a case that m is an odd number.

As a result, it is possible to vary the circumferential positions of the m cylinders belonging to each of the cylinder rows arranged along the axial direction so that the plurality of pistons in the same cylinder row can have phase differences between one another. Further, as circumferential positions of adjacent two of the cylinders in the same cylinder row are varied from each other, it is easier to secure the distance between adjacent two of the cylinders while suppressing the size increase of the hydraulic machine in the axial direction.

In some embodiments, the N cylinders in the cylinder block are helically arranged in accordance with such an arrangement that an i^{th} virtual cylinder C_{i,j} from an endmost cylinder in the axial direction belonging to a j^{th} virtual cylinder row is shifted by L × (j-1)/n in the axial direction and then a (i+1)^{th} virtual cylinder C_{i+1,j} from the endmost cylinder in the axial direction belonging to the j^{th} virtual cylinder row is shifted in the circumferential direction with respect to the virtual cylinder C_{i,j} so that the virtual cylinder C_{i+1,j} is disposed at a vertex point of an isosceles triangle having a base extending between the virtual cylinder C_{i,j} and the virtual cylinder C_{i,j+1}, where L is a distance between adjacent two of the virtual cylinders in each of the virtual cylinder rows.

By setting an arrangement such that a virtual cylinder C_{i,j} is shifted by L × (j-1)/n in the axial direction as a basis for arranging N cylinders, the N cylinders are arranged along such a helix that the distance in the axial direction between adjacent two of the cylinders arranged in the circumferential direction is L/n. As a result, the positions in the axial directions of adjacent two of the cylinders arranged in the circumferential direction are displaced from one another, thereby reducing the frequency of contact between the machine element and the contact part of the piston at the same axial position. Thus, it is possible to efficiently suppress wear of the machine element. Also, it is easier to secure the time for circumferentially dissipating friction heat caused by the contact between the machine element and the contact part of the piston from the machine element (heat dissipation time). Moreover, in the case where lubricant oil is supplied to where the mechanical part contacts with the contact part of the piston, it is easier to secure the time required for the lubricant film to recover (film recovery time).

Further, by setting an arrangement such that a virtual cylinder C_{i+1,j} is shifted in the circumferential direction with respect to the virtual cylinder C_{i, j} so that the virtual cylinder C_{i+1, j} is disposed at a vertex point of an isosceles triangle having a base extending between the virtual cylinder C_{i,j} and the virtual cylinder C_{i, j+1} as a basis for arranging N cylinders, the N cylinders are arranged in a staggered fashion. As a result, the circumferential positions of the cylinders are varied from one another between the helix pitches of the above helix. Thus, it is easier to secure the distance between adjacent two of the cylinders while suppressing the size increase of the hydraulic machine in the axial direction. Also, it is possible to let the plurality of pistons on adjacent two of the helix pitches have phase differences between one another.

In some embodiments, the cylinder block is formed by a single-piece member being continuous in the circumferential and axial directions.

As a result, the degree of freedom in arranging cylinders in the cylinder block is improved. That is, by adopting a cylinder block formed by a single-piece member being continuous in the circumferential and axial directions of the hydraulic machine instead of configuring a cylinder block with a plurality of segments, the cylinders do not have to be arranged avoiding dividing lines between the segments. Thus, it is possible to adopt a cylinder arrangement which improves strength of the cylinder block while suppressing increase in size of the hydraulic machine in the axial direction.

A wind turbine generator according to at least one embodiment of the present invention comprises:
at least one blade; a hub on which the at least one blade is mounted;
a hydraulic pump configured to be driven by rotation of the hub;
a hydraulic motor configured to be driven by pressurized oil generated by the hydraulic pump; and
a generator configured to be driven by the hydraulic motor,
wherein at least one of the hydraulic pump or the hydraulic motor is a hydraulic machine of a radial piston type,
wherein the hydraulic machine of a radial piston type comprises:
   N pistons arranged along a radial direction of the hydraulic machine; and
   a cylinder block comprising N cylinders each of which is configured to guide each of the N pistons reciprocatably along the radial direction, and
   wherein the N cylinders are arranged in the cylinder block in accordance with such an arrangement that, with respect to a virtual arrangement where n virtual cylinder rows are arranged in a circumferential direction of the hydraulic machine and each of the n virtual cylinder rows is formed by m virtual cylinders arranged in an axial direction of the hydraulic machine, at least one of the m virtual cylinders belonging to each of the n virtual cylinder rows is shifted in the circumferential direction, m being an integer not less than two, n being an integer not less than two, N being N = m × n.

In the above wind turbine generator, at least one of the cylinders belonging to at least one cylinder row formed by m cylinders arranged in the axial direction of the hydraulic machine is disposed at a circumferential position varied from other cylinders belonging to the same cylinder row. As a result, it is easier to secure the distance between adjacent two of the cylinders while suppressing increase in size of the hydraulic machine in the axial direction. Thus, it is possible to obtain sufficient strength of the cylinder block against the torsion moment caused by the side force transmitted from the machine element via the pistons and the cylinders, for instance.

### [Advantageous Effects]

According to at least one embodiment of the present invention, it is easier to secure the distance between adjacent two of the cylinders while suppressing increase in size of the hydraulic machine in the axial direction of the hydraulic machine. As a result, it is possible to obtain sufficient strength(stiffness) of the cylinder block against the torsion moment caused by the side force transmitted from the machine element via the pistons and the cylinders, for instance.

### BRIEF DESCRIPTION OF DRAWINGS

[FIG.1] Fig. 1 is an illustration f a wind turbine generator according to one embodiment.
[FIG. 2] Fig. 2 is a schematic cross-sectional view of a hydraulic machine of a radial piston type according to one embodiment.
[FIG. 3] Fig. 3 is an oblique view of a cylinder block according to one embodiment.
[FIG. 4] Fig. 4 is a development view of a cylinder block for explaining a deciding method of a cylinder arrangement.
[FIG. 5] Fig. 5 is a development view of the cylinder block illustrating a cylinder arrangement according to one embodiment.
[FIG. 6] Fig. 6 is a development view of the cylinder block illustrating a cylinder arrangement according to one embodiment.
[FIG. 7] Fig. 7 is a development view of the cylinder block illustrating a cylinder arrangement according to one embodiment.
[FIG. 8] Fig. 8 is an oblique perspective view of a cylinder block having the arrangement illustrated in Fig. 7.
[FIG. 9] Fig. 9 is a development view of the cylinder block illustrating a cylinder arrangement according to one embodiment.
[FIG. 10] Fig. 10 is a development view of the cylinder block illustrating a cylinder arrangement according to one embodiment.
[FIG. 11] Fig. 11 is an oblique view of a cylinder block having a cylinder arrangement according to one embodiment.
[FIG. 12] Fig. 12 is a development view of a cylinder block for explaining a deciding method of a cylinder arrangement in a staggered fashion along a helix.
[FIG. 13] Fig. 13 is an oblique view of a machine element according to one embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

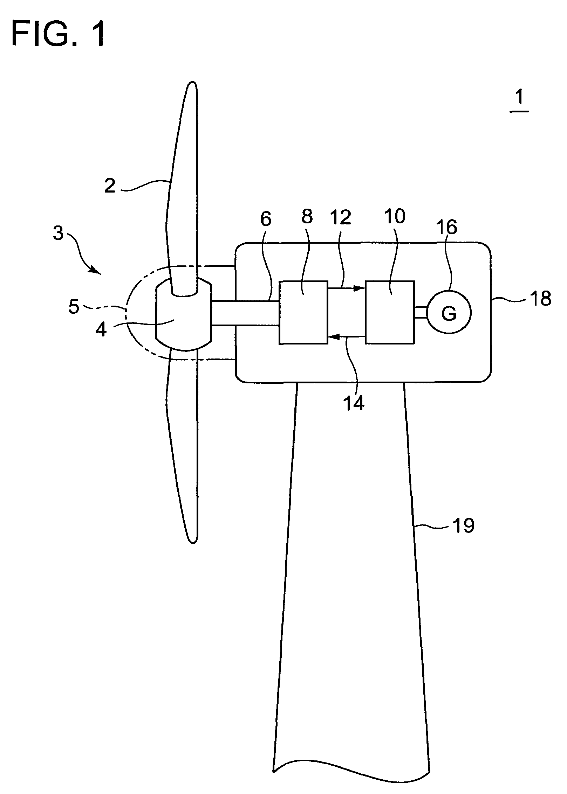

Fig. 1 is an illustration f a wind turbine generator according to one embodiment.

As shown in Fig. 1, a wind turbine generator 1 includes a rotor 3 constituted of at least one blade 2 and a hub 4. The hub 4 may be covered by a hub cover 5.

In one embodiment, a hydraulic pump 8 is connected to the rotor 3 via a rotation shaft 6. A hydraulic motor 10 is connected to the hydraulic pump 8 via a high pressure oil line 12 and a low pressure oil line 14. Specifically, an outlet of the hydraulic pump 8 is connected to an inlet of the hydraulic motor 10 via the high pressure oil line 12, and an inlet of the hydraulic pump 8 is connected to an outlet of the hydraulic pump 10 via the low pressure oil line 14. The hydraulic pump 8 is configured to be driven by the rotation shaft 6 and pressurize operating oil so as to generate high pressure operating oil (pressurized oil). The pressurized oil generated in the hydraulic motor 8 is supplied to the hydraulic motor 10 via the high pressure oil line 12, and then the hydraulic motor 10 is driven by the pressurized oil. The low pressure operating oil having performed work in the hydraulic motor 10 is returned to the hydraulic pump 8 passing through the low pressure oil line 14 provided between the outlet of the hydraulic motor 10 and the inlet of the hydraulic pump 8.

A generator 16 is coupled to the hydraulic motor 10. In one embodiment, the hydraulic generator 16 is connected to a utility grid and is a synchronous generator driven by the hydraulic motor 10.

A part of the rotation shaft 6 is covered by a nacelle 18 installed on a tower 19. In one embodiment, the hydraulic pump 8, the hydraulic motor 10 and the generator 16 are provided inside the nacelle 18.

In some embodiments, at least one of the hydraulic pump 8 or the hydraulic motor 10 is a hydraulic machine of a radial piston type described below.

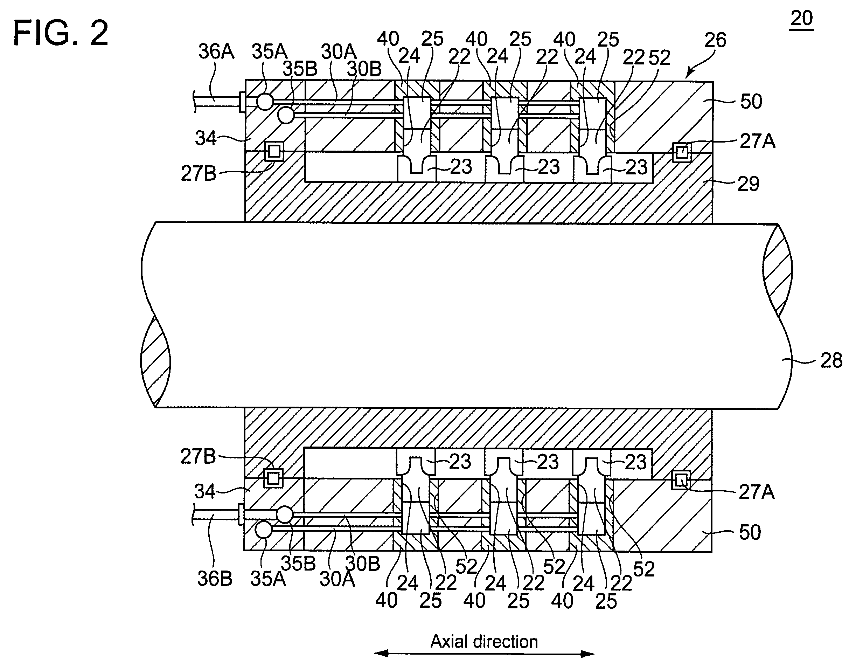

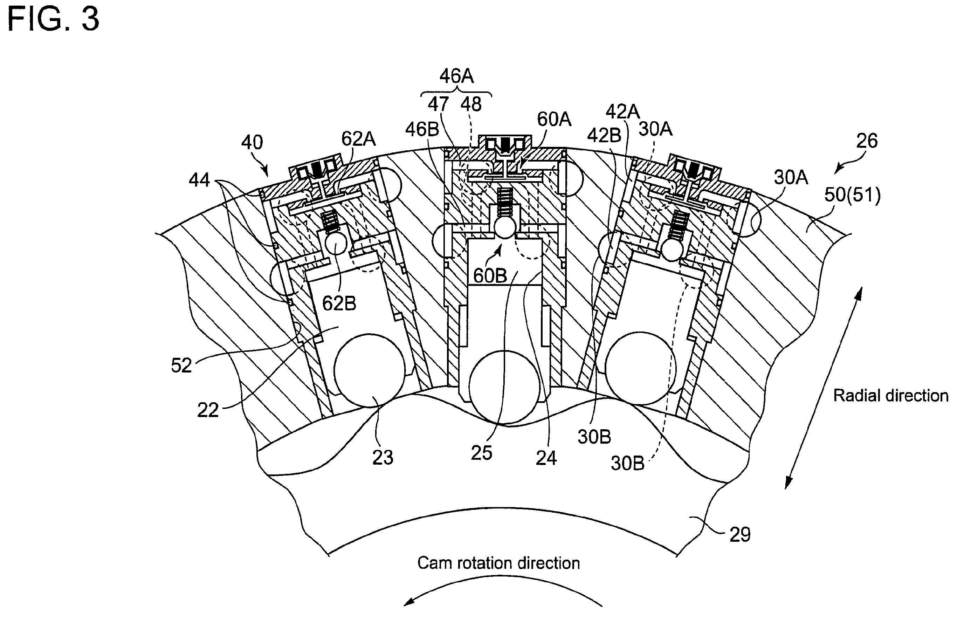

Fig. 2 is a schematic cross-sectional view of a hydraulic machine of a radial piston type according to one embodiment. Fig. 3 is a partial enlarged cross-sectional view of a hydraulic machine of a radial piston type along the radial direction according to one embodiment.

In the exemplary embodiment illustrated in Figs. 2 and 3, a hydraulic machine 20 includes a plurality of pistons 22 disposed along a radial direction of the hydraulic machine 20 and a cylinder block 26 having a plurality of cylinders 24 for reciprocably holding the plurality of pistons 22 respectively. Each of the plurality of pistons 22 is guided by each of the plurality of cylinders 24 and is reciprocable along the radial direction of the hydraulic machine 20. When each of the plurality of pistons 22 reciprocates in each of the plurality of cylinders 24, the volume of a hydraulic chamber 25 formed by the piston 22 and the cylinder 24 changes cyclically. The reciprocating motion of the piston 22 which accompanies the cyclic volume change of the hydraulic chamber 25 is convertible into a rotational motion of a machine element 29, and vice versa.

For instance, in the case where the hydraulic machine is 20 a hydraulic pump, a rotational motion of the machine element 29 which rotates with the rotation shaft 28 of the hydraulic machine 20 is converted into a reciprocating motion of the piston 22, and then cyclic volume change of the hydraulic chamber 25 occurs, generating high pressure operating oil (pressurized oil) in the working chamber 25. In contrast, in the case where the hydraulic machine 20 is a hydraulic motor, a reciprocating motion of the piston 25 is caused by introducing pressurized oil into the hydraulic chamber 25, and then the reciprocating motion is converted into a rotational motion of the machine element 29. As a result, the rotation shaft 28 of the hydraulic machine 20 rotates with the machine element 29.

As described above, with use of the machine element 29, the energy is converted between the rotational energy of the rotation shaft 28 of the hydraulic machine 20 (mechanical energy) and the fluid energy of the operating oil. Thus, the hydraulic machine 20 is capable of serving as the hydraulic pump or the hydraulic motor as desired.

In one embodiment, as shown in Fig. 2, the machine element 29 is a cam which is configured to rotate together with the rotation shaft 28 and which has a cam face contacting a contact part 23 provided for the piston 22. In this case, at least one bearing 27A may be provided between the cam (machine element 29) and the cylinder block 26 for generating a relative rotational motion of the cam (machine element 29) with respect to the contact part 23. In the exemplary embodiment illustrated in the drawing, the contact part 23 is a roller rotatably attached to the piston 22. Also, in the exemplary embodiment illustrated in Figs. 2 and 3, the cam face of the cam (machine element 29) is an outer circumferential face of a ring cam formed by a plurality of lobes arranged along the circumferential direction of the hydraulic machine 20. In another embodiment, the cam face of the cam (machine element 29) is a surface of a cam which is eccentric with respect to the rotation shaft 28 of the hydraulic machine 20 (eccentric cam).

In another embodiment, the machine element 29 is a crankshaft which is configured to rotate with the rotation shaft 28 and which has at least one crankpin configured to be connected to the piston 22 via a connecting rod.

In some embodiments, the cylinder block 26 includes a plurality of cylinder sleeves 40 having a plurality of cylinders respectively, and a cylinder block body 50 having a plurality of cylinder sleeve holes 52 to which a plurality of cylinder sleeves 40 are inserted respectively.

In the cylinder block body 50, at least one inner oil path 30 (30A, 30B) communicating with a plurality of hydraulic chambers 25 is formed.

In one embodiment, as shown in Figs. 2 and 3, a plurality of inner oil paths 30 (30A, 30B) is provided along the axial direction of the hydraulic machine 20 and annular collecting lines 35 (35A, 35B), with which the plurality of inner oil paths 30 (30A, 30B) communicates respectively, are formed inside an annular end plate 34. The end plate 34 is an annular plate member attached to an end of the cylinder block 26. In one embodiment, a bearing 27A is provided between the end plate 34 and the cam 29, the end plate 34 being capable of maintaining a static state without being influenced by the rotational motion of the cam 29. The annular collecting lines 35 (35A, 35B) inside the end plate 34 are connected to outer pipes 36 (36A, 36B) respectively. Accordingly, each of the hydraulic chambers 25 communicates with the outer pipes 36 (36A, 36B) via the inner oil paths 30 (30A, 30B) and the annular collecting lines 35 (35A, 35B).

In some embodiments, as shown in Fig. 3, the cylinder sleeve 40 includes at least one annular groove 42 (42A, 42B) which is provided at the outer circumferential face of the cylinder sleeve 40 and which opens at at least one of the inner oil paths 30 (30A, 30B). An annular seal member 44 is provided at both sides in the radial direction of the hydraulic machine 20 of each of the annular grooves 42 (42A, 42B), the annular seal member 44 being provided at the outer circumferential face of the hydraulic machine 20 for sealing a space between the cylinder sleeve 40 and the sleeve hole 52. Inside the cylinder sleeve 40, communication paths 46 (46A, 46B) are provided for providing communication between each of the annular grooves 42 (42A, 42B) and the hydraulic chamber 25. Also, in each of the communication paths 46 (46A, 46B), a valve 60 (60A, 60B) is provided for switching the communication state between each of the inner oil paths 30 (30A, 30B) and the hydraulic chamber 25 of the cylinder block 26.

In one embodiment, the at least one inner oil path 30 provided in the cylinder block body 50 includes an oil supply path 30A for supplying the operating oil to the hydraulic chamber 25 and an oil discharge path 30B for discharging the operating oil from the hydraulic chamber 25. Also, the at least one annular groove 42 provided in the cylinder sleeve 40 includes an oil supply groove 42A which opens at the oil supply path 30A in the cylinder block body 50 and an oil discharge groove 42B which opens at the oil discharge path 30B in the cylinder block body 50. Moreover, the communication path 46 includes an oil supply communication path 46A for allowing the hydraulic chamber 25 to communicate with the oil supply groove 42A via an oil supply valve 60A and an oil discharge communication path 46B for allowing the hydraulic chamber 25 to communicate with the oil discharge groove 42B via an oil discharge valve 60B.

Further, in one embodiment, the oil supply valve 60A and the oil discharge valve 60B are assembled in the cylinder sleeve 40 in the state where the oil supply valve 60A and the oil discharge valve are lined in the radial direction of the hydraulic machine 20, and a valve body 62A of the oil supply valve 60A and a valve body 62B of the oil discharge valve 60B overlap with respect to the radial direction of the hydraulic machine 20. Corresponding to the oil supply valve 60A and the oil discharge valve 60B provided at different positions in the radial direction of the hydraulic machine 20 as described above, the oil supply groove 42A and the oil discharge groove 42B are also provided at different positions in the radial direction of the hydraulic machine 20 on the outer circumferential face of each of the cylinder sleeves 40. The oil supply communication path 46A corresponding to the oil supply valve 60A disposed further from the hydraulic chamber 25 is constituted of a first communication path 47 extending along the perpendicular direction of the radial direction of the hydraulic machine 20 and a second communication path 48 extending along the radial direction of the hydraulic machine 20. On the other hand, the oil discharge communication path 46B corresponding to the oil discharge valve 60B disposed closer to the hydraulic chamber 25 is provided so as to extend along the perpendicular direction of the radial direction of the hydraulic machine 20, avoiding the second communication path 48 of the oil supply communication path 46A.

As a result, it is possible to efficiently arrange the oil supply valve 60A and the oil discharge valve 60B, and the oil supply communication path 46A and the oil discharge communication path 46B in the cylinder sleeve 40.

In the case where the hydraulic machine 20 is a hydraulic pump, when the oil supply valve 60A is opened, operating oil from the oil supply path 30A in the cylinder block body 50 is introduced into the hydraulic chamber 25 via the oil supply groove 42A and the oil supply communication path 46A. Then, the operating oil introduced into the working chamber 25 is compressed by volume decrease of the hydraulic chamber 25 accompanying the motion of the piston 22 which moves towards the top dead point from the bottom dead point, and thereby pressurized. The high pressure operating oil (pressurized oil) produced as described above is, as the oil discharge valve 60B is opened, taken out to the oil discharge path 30B in the cylinder block body 50 via the oil discharge communication path 46B and the oil discharge groove 42B.

On the other hand, in the case where the hydraulic machine 20 is a hydraulic motor, when the oil supply valve 60A is opened, high pressure operating oil (pressurized oil) from the oil supply path 30A in the cylinder block body 50 is introduced into the hydraulic chamber 25 via the oil supply groove 42A and the oil supply communication path 46A. Then, the piston 22 is moved towards the bottom dead point from the top dead point by the pressurized oil introduced into the hydraulic chamber 25. Subsequently, as the oil discharge valve 60B is opened, the operating oil in the hydraulic chamber 25 is taken out to the oil discharge path 30B in the cylinder block body 50 via the oil discharge communication path 46B and the oil discharge groove 42B.

Next, an arrangement of the cylinders 24 in the cylinder block 26 will be described.

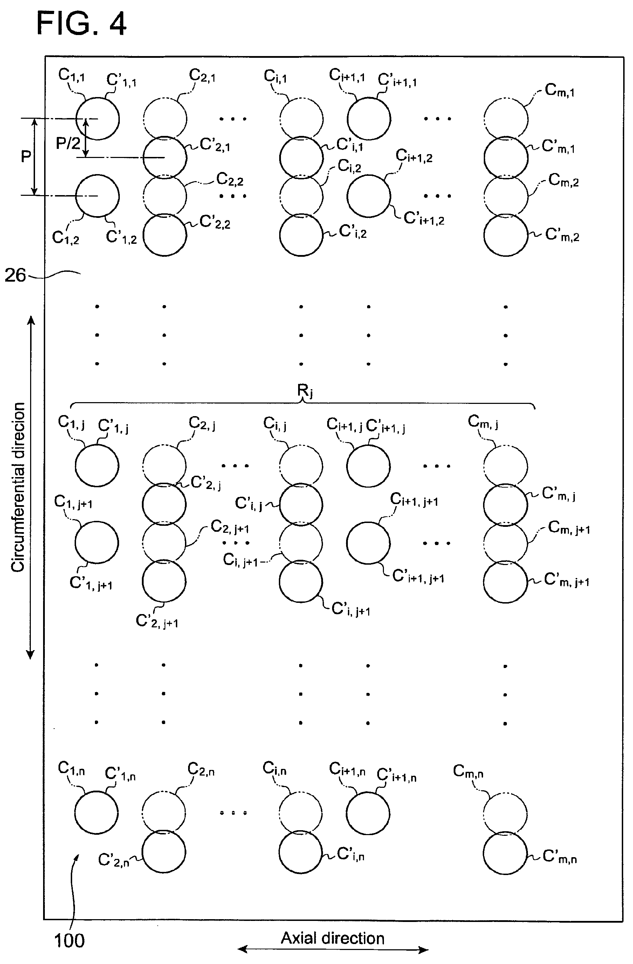

Fig. 4 is a development view of a cylinder block for explaining a deciding method of a cylinder arrangement according to one embodiment.

As shown in the drawing, N cylinders 24 are provided in the cylinder block 26, N being N = m × n. The circumferential and axial positions of N cylinders 24 (C'_{i,j}) are decided based on a modified arrangement of a virtual arrangement 100 where n virtual cylinder rows Rⱼ are arranged in a circumferential direction of the hydraulic machine 20 and each of the n virtual cylinder rows is formed by m virtual cylinders C_{l,j} to C_{m,j} arranged in an axial direction of the hydraulic machine 20, m being an integer not less than two, and n being an integer not less than two. The virtual arrangement 100 is constituted of N virtual cylinders C_{i,j} regularly arranged in the circumferential and axial directions of the hydraulic machine 20, while i satisfies i = 1 to m, and j satiesfies j = 1 to j.

In some embodiments, N cylinders 24 (C'_{i,j}) are arranged in accordance with such an arrangement that, with respect to the virtual arrangement 100, at least one of the m virtual cylinders C_{1,j} to C_{m,j} belonging to each of the virtual cylinder rows Rⱼ is shifted in the circumferential direction of the hydraulic machine 20.

As a result, at least one of the cylinders C'_{1,j} to C'_{m,j} belonging to at least one cylinder row formed by m cylinders arranged in the axial direction is disposed at a different circumferential position from other cylinders belonging to the same cylinder row. Thus, it is easier to secure the distance between adjacent two of the cylinders 24 while suppressing increase in size of the hydraulic machine 20 in the axial direction. Accordingly, it is possible to obtain sufficient strength of the cylinder block 26 against the torsion moment caused by the side force transmitted from the machine element 29 via the piston 22 and the cylinder 24, for instance.

In some embodiments, as shown in Fig. 4, the N cylinders 24 (C'_{i,j}) in the cylinder block 26 are arranged in accordance with such an arrangement that the m virtual cylinders C_{1,j} to C_{m,j} belonging to each of the virtual cylinder rows Rⱼ are alternately displaced in the circumferential direction by P/2 in a staggered fashion, P being a distance in the circumferential direction between adjacent two of the virtual cylinder rows R_{j,} Rⱼ₊₁.

As a result, in the cylinder row formed by m cylinders arranged in the axial direction, the circumferential positions of the two adjacent cylinders C'_{i,j} and C'_{i+1,j} differ by P/2. Thus, it is even easier to secure the distance between adjacent two of the cylinders 24 while suppressing increase in size of the hydraulic machine 20 in the axial direction. Accordingly, it is possible to further improve strength of the cylinder block 26.

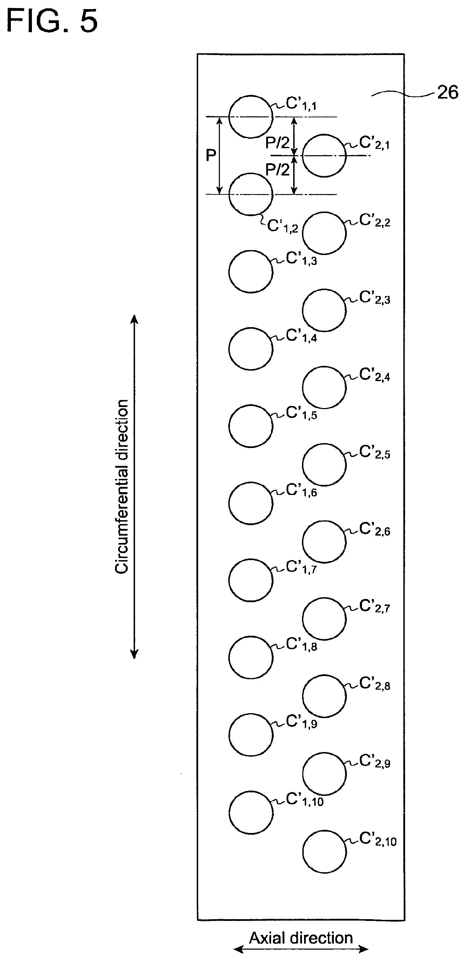

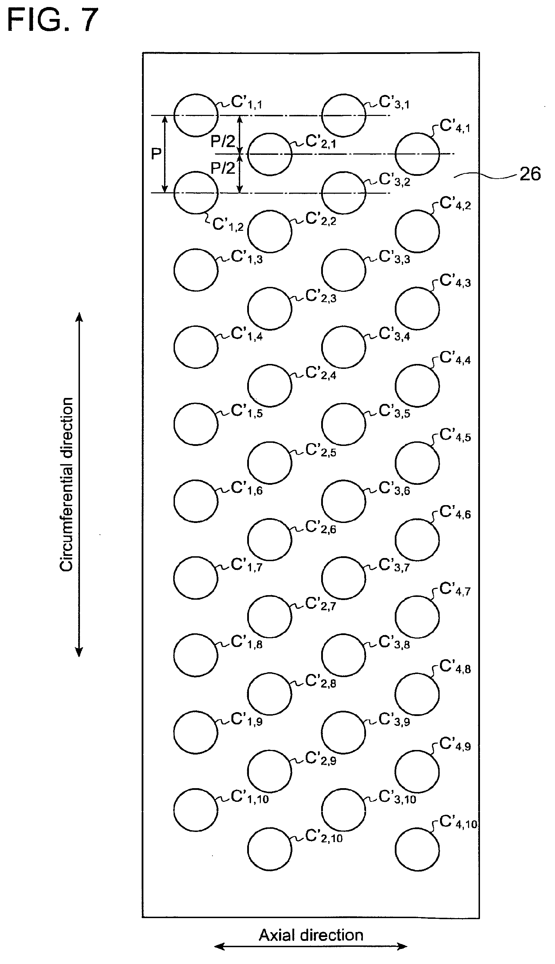

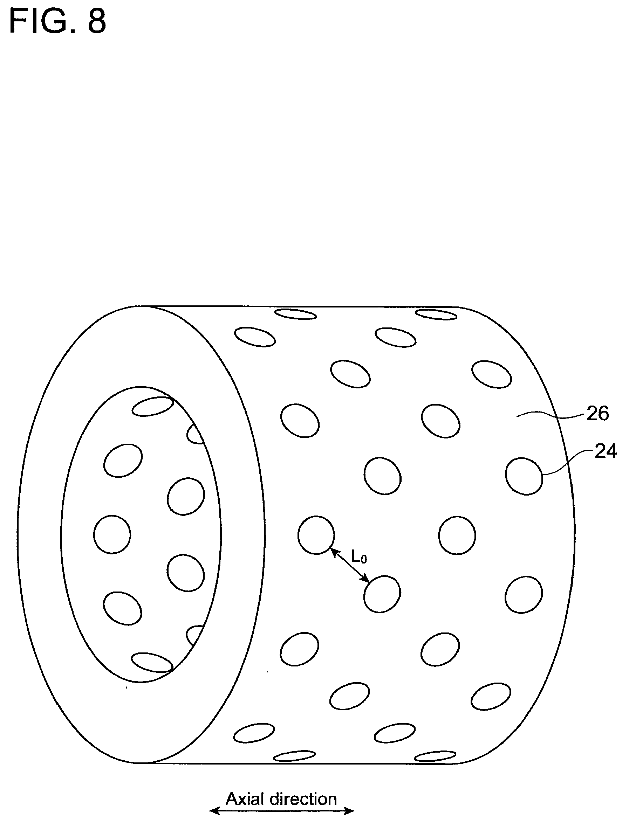

Figs. 5 to 7 are development views of a cylinder block illustrating cylinder arrangements according to some embodiments. Fig. 8 is an oblique view of a cylinder block having the arrangement illustrated in Fig. 7.

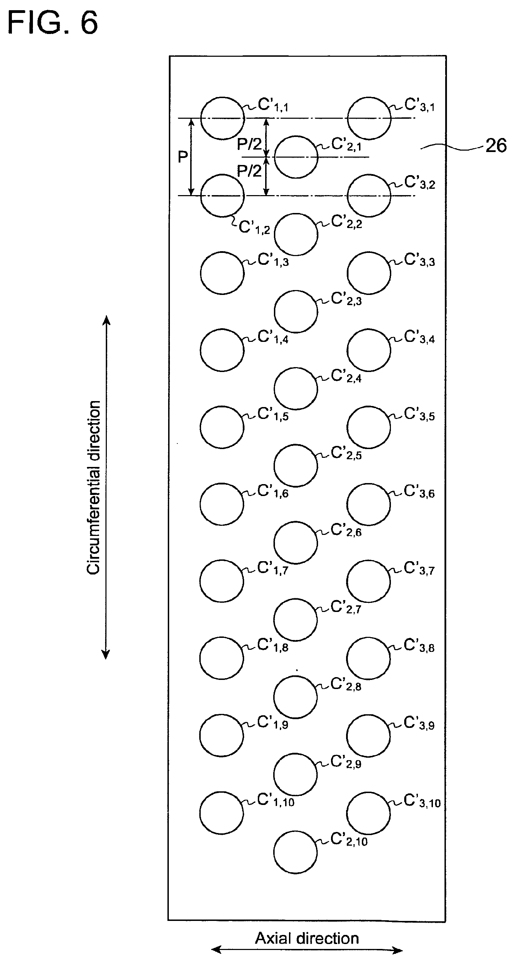

In the exemplary embodiment shown in Fig. 5, two cylinder groups of 10 cylinders arranged in the circumferential direction of the hydraulic machine 20 are provided adjacent in the axial direction of the hydraulic machine 20. In another exemplary embodiment shown in Fig. 6, three cylinder groups of 10 cylinders arranged in the circumferential direction of the hydraulic machine 20 are provided adjacent in the axial direction of the hydraulic machine 20. Likewise, in yet another exemplary embodiment shown in Fig. 7, four cylinder groups of 10 cylinders arranged in the circumferential direction of the hydraulic machine 20 are provided adjacent in the axial direction of the hydraulic machine 20. Also, as shown in Figs. 5 to 7, the circumferential positions of the cylinder C'_{i,j} and the cylinder C'ᵢ₊₁ are displaced by P/2 in the axial direction of the hydraulic machine 20 between adjacent two of the cylinder groups, and thus N cylinders 24 (C'_{i,j}) in the cylinder block 26 are arranged in a staggered fashion.

As a result, as shown in Fig. 8, it is possible to increase the distance L₀ between adjacent two of the cylinders 24 in the cylinder block 26. Thus, it is possible to achieve high strength of the cylinder block 26.

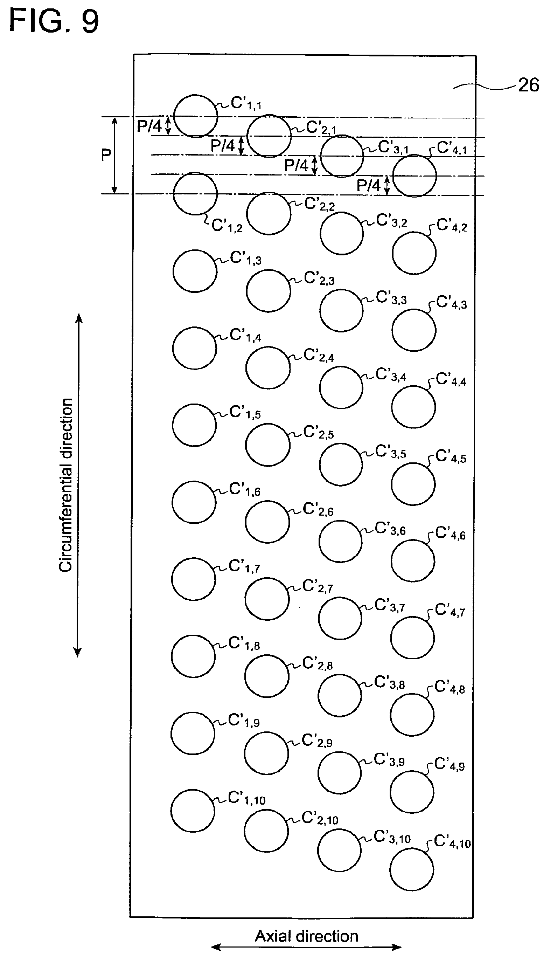

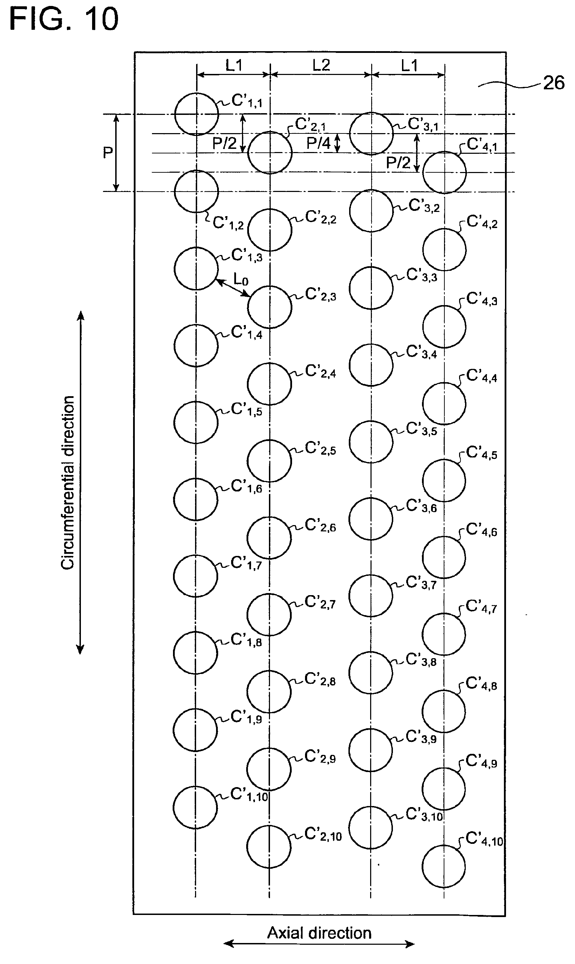

Each of Figs. 9 and 10 is a development view of a cylinder block illustrating a cylinder arrangement according to some embodiment. In the exemplary embodiments shown in Figs. 9 and 10, the number m of m cylinders arranged in the axial direction of the hydraulic machine 20 is four, and the number n of n cylinders arranged in the circumferential direction of the hydraulic machine 20 is ten. However, each of the numbers m and n may be an arbitrary integer not less than two.

As shown in Figs. 9 and 10, in some embodiments, N cylinders 24 (C'_{i,j}) in the cylinder block 26 are arranged in accordance with such an arrangement that the circumferential positions of the m virtual cylinders C_{1,j} to C_{m,j} belonging to each of the virtual cylinder rows Rⱼ are varied from one another. In this case, m cylinders C'_{1,j} to C'_{m,j} belonging to each cylinder row along the axial direction of the hydraulic machine 20 have different circumferential positions from one another.

As a result, the plurality of pistons 22 in the same cylinder row can have phase differences between one another. Thus, it is possible to efficiently reduce pulsation and vibration of the hydraulic machine 20.

In one embodiment, as shown in Fig. 9, the N cylinders 24 (C'_{i,j}) in the cylinder block 26 are arranged in accordance with such an arrangement that a i^{th} virtual cylinder C_{i,j} from an endmost cylinder C_{1,j} in the axial direction and a (i+1)^{th} virtual cylinder C_{i+1,j} among the m virtual cylinders C_{1,j} to C_{m,j} belonging to each of the virtual cylinder rows Rⱼ have the circumferential positions alternately displaced with a distance P/m, P being a distance in the circumferential direction between adjacent two of the virtual cylinder rows Rⱼ, Rⱼ₊₁. In this case, N cylinders 24 (C'_{i,j}) in the cylinder block 26 have circumferential positions different from one another by P/m. In the exemplary embodiment illustrated in Fig. 9, all cylinders 24 (C'_{i,j}) are arranged at circumferential positions different from one another by P/4.

As the circumferential positions of the N cylinders 24 (C'_{i,j}) are varied from one another as described above, the N pitons can have phase differences between one another. Thus, it is possible to suppress pulsation and vibration of the hydraulic machine 20 more efficiently.

In another embodiment, as shown in Fig. 10, the N cylinders 24 (C'_{i,j}) in the cylinder block 26 are arranged in a staggered fashion in accordance with such an arrangement that a i^{th} virtual cylinder C_{i,j} from an endmost virtual cylinder C_{i,j} in the axial direction among the m virtual cylinders C_{i,j} to C_{m,j} belonging to each of the virtual cylinder rows Rⱼ is arranged with a distance P/2 in the circumferential direction from one of a (i-1)^{th} virtual cylinder C_{i-1,j} or a (i+1)^{tb} virtual cylinder C_{i+1,j} and with a distance smaller than P/2 from the other of the (i-1)^{th} virtual cylinder C_{i-1,j} or the (i+1)^{th} virtual cylinder C_{i+1,j}, P being a distance in the circumferential direction between adjacent two of the virtual cylinder rows Rⱼ, Rⱼ₊₁. For example, the distance in the circumferential direction between the i^{th} virtual cylinder and the other of the (i-1)^{th} virtual cylinder C_{i-1,j} or the (i+1)^{th} virtual cylinder C_{i+1,j} may be (P/2-P/m) in such a case that m is an even number and may be (P/2-P/(m+1)) in such a case that m is an odd number.

As a result, by varying the circumferential positions of m cylinders C'_{1,j} to C'_{m,j} belonging to each of cylinder rows arranged in the axial direction, the plurality of pistons 22 in the same cylinder row can have phase differences between one another. Further, as N cylinders 24 (C'_{i,j}) are arranged in a staggered fashion and the circumferential distance between the cylinder C'_{i,j} and the cylinder C'_{i+1,j} arranged adjacent to each other in the same cylinder row is relatively large, it is easier to secure the distance between adjacent two of the cylinders 24 while suppressing increase in size of the hydraulic machine 20 in the axial direction.

In the exemplary embodiment shown in Fig. 10, the circumferential distance between the cylinder C'_{1,j} and the cylinder C'_{2,j} adjacent to C'_{1,j} is P/2, the circumferential distance between the cylinder C'_{2,j} and the cylinder C'_{3,j} adjacent to C'_{2,j} is P/4, and the circumferential distance between the cylinder C'_{3,j} and the cylinder C'_{4,j} adjacent to C'_{3,j} is P/2.

As a result, the circumferential positions of m cylinders C'_{1,j} to C'_{4,j} belonging to each of the cylinder rows arranged along the axial direction are varied from one another, and thus the plurality of pistons 22 in the same cylinder row can have phase differences between one another.

Further, in some pairs of adjacent two cylinders (namely, the pair of the cylinder C'_{1,j} and the cylinder C'_{2,j} ,and the pair of the cylinder C'_{1,j} and the cylinder C'_{2,j}), the circumferential distance between adjacent two of the cylinders is P/2 which is relatively large. Thus, it is easier to secure the distance between adjacent two of the cylinders 24 while suppressing increase in of the hydraulic machine 20 in the axial direction. That is, even if the axial distance L₁ between a pair of adjacent cylinders arranged at circumferential positions displaced by P/2 is small, it is possible to secure such a distance L₀ between the cylinders that is capable of achieving the required strength of the cylinder block 26.

Herein, the axial distance L₁ between a pair of adjacent two of the cylinders disposed at the circumferential positions displaced by P/2 may be smaller than the axial distance L₂ between a pair of adjacent cylinders disposed at the circumferential positions displaced by P/4. In this manner, a pair of cylinders with a small distance in the circumferential direction can have a large distance in the axial direction. As a result, it is possible to average the distances between adjacent cylinders and thus improve strength of the cylinder block 26 as a whole.

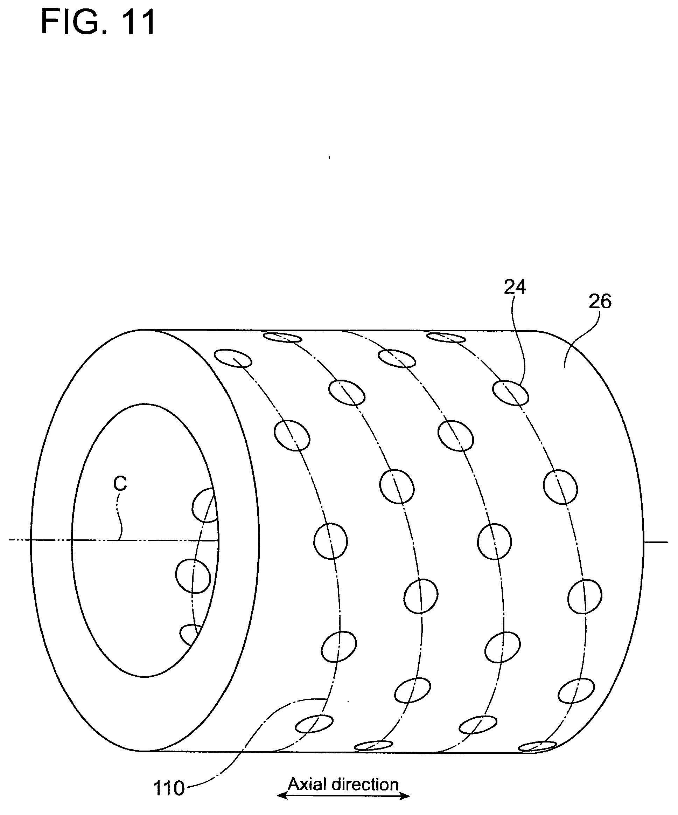

Fig. 11 is an oblique view of a cylinder block having a cylinder arrangement according to another embodiment.

In the exemplary embodiment shown in Fig. 11, N cylinders 24 in the cylinder block 26 are arranged on the helix 110 centered at the central axis C of the cylinder block 26 in a staggered fashion.

By arranging the N cylinders 24 on the helix 110 as described above, the axial positions of adjacent two of the cylinders 24 arranged in the circumferential direction are displaced, thereby reducing the frequency of the contact between the machine element 29 and the contact part 23 of the piston 22 at the same axial position. Thus, it is possible to efficiently suppress wear of the machine element 29. Also, it is easier to secure the time for circumferentially dissipating friction heat caused by the contact of the machine element 29 with the contact part 23 from the machine element 29 (heat dissipation time). Moreover, in the case where lubricant oil is supplied to where the mechanical part 29 contacts the contact part 23 of the piston 22, it is easier to secure the time required for the lubricant film to recover (film recovery time).

Further, as N cylinders 24 are arranged in a staggered fashion, the circumferential positions of the cylinders 24 are different between the helix pitches on the helix 110. As a result, it is easier to secure the distance between adjacent two of the cylinder 24 while suppressing increase in size of the hydraulic machine 20 in the axial direction. Also, it is possible to let the plurality of pistons 22 in adjacent two of the helix pitches have phase differences between one another.

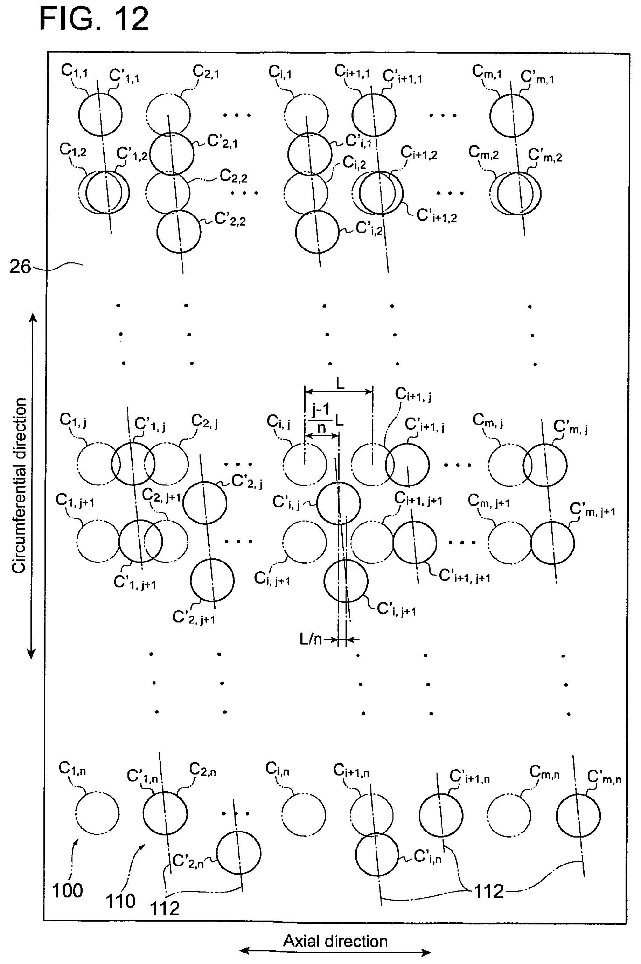

Fig. 12 is a development view of a cylinder block for explaining a deciding method of a cylinder arrangement in a staggered fashion along a helix. In Fig. 12, elements similarly illustrated in the development view of a cylinder block in Fig. 4 are provided with common reference signs to Fig. 4 and the description is omitted.

As shown in the drawing, in some embodiments, the axial and circumferential positions of N cylinders 24 (C'_{i,j}) in the cylinder block 26 are arranged based on such an arrangement that an i^{th} virtual cylinder C_{i,j} from an endmost cylinder in the axial direction belonging to a j^{th} virtual cylinder row Rⱼ is shifted by L × (j-1)/n in the axial direction, where L is a distance in the axial direction between adjacent two of the virtual cylinders in each of the virtual cylinder rows 100. Also, a (i+1)^{th} virtual cylinder C_{i+1,j} from the endmost cylinder in the axial direction belonging to the j^{th} virtual cylinder row Rⱼ is shifted in the circumferential direction with respect to the virtual cylinder C_{i,j} so that the virtual cylinder C_{i+1,j} is disposed at a vertex point of an isosceles triangle having a base extending between the virtual cylinder C_{i,j} and the virtual cylinder C_{i,j+1}.

By arranging N cylinders 24 (C'_{i,j}) based on such an arrangement that the virtual cylinder C_{i,j} is shifted by L × (j-1)/n in the axial direction, N cylinders C'_{i,j} are arranged along the helix 110 where the axial distance between adjacent two of the cylinders 24 is L/n. The helix 110 is centered at the central axis C of the cylinder block 26 (see Fig. 11) with a helix pitch length L and n cylinders 24 are arranged on each of helix pitches 112, the helix pitch 112 being a part which corresponds to one turn of the helix 110. As a result, the axial positions of the cylinders 24 arranged adjacent in the circumferential direction are displaced, thereby reducing the frequency of contact between the machine element 29 and the contact part 23 of the piston 22 at the same axial position. Accordingly, it is possible to efficiently suppress wear of the machine element 29 and secure the above described heat dispassion time and the film recovery time.

Further, by arranging N cylinders 24 (C' _{i,j}) based on such an arrangement that the virtual cylinder C_{i+1,j} is shifted in the circumferential direction with respect to the virtual cylinder C_{i,j} so that the virtual cylinder C_{i+1,j} is disposed at a vertex point of an isosceles triangle having a base extending between the virtual cylinder C_{i,j} shifted by L × (j-1)/n in the axial direction and the virtual cylinder C_{i,j+1} shifted by L × n in the axial direction, N cylinders 24 are arranged on the helix 110 in a staggered fashion. As a result, the circumferential positions of the cylinders 24 are different between the helix pitches 112 in the helix 110. Thus, it is possible to secure the distance between adjacent two of the cylinders 24 while suppressing increase in size of the hydraulic machine 20 in the axial direction. Also, the plurality of pistons 22 in adjacent two of the helix pitches 112 can have phase differences in one another.

In some embodiments, as shown in Figs. 8 and 11, the cylinder block 26 is formed by a single-piece member being continuous in the circumferential and axial directions of the hydraulic machine 20. In one embodiment, the cylinder block 26 is a cylindrical member being continuous in the circumferential and axial directions of the hydraulic machine 20. It is possible to manufacture such a cylinder block 26 by a ring forging process, for instance.

By forming the cylinder block 26 by a single-piece member being continuous in the circumferential and axial directions, the degree of freedom in arranging the cylinders 24 in the cylinder block 26 improves. That is, as the cylinders do not have to be arranged avoiding parting lines between segments as in the case where the cylinder block is formed by a plurality of segments, it is possible to arbitrarily select the circumferential and axial positions of the cylinders 24 in the cylinder block 26. Thus, it is possible to adopt such a cylinder arrangement that improves strength of the cylinder block while suppressing increase in size of the hydraulic machine 20 in the axial direction.

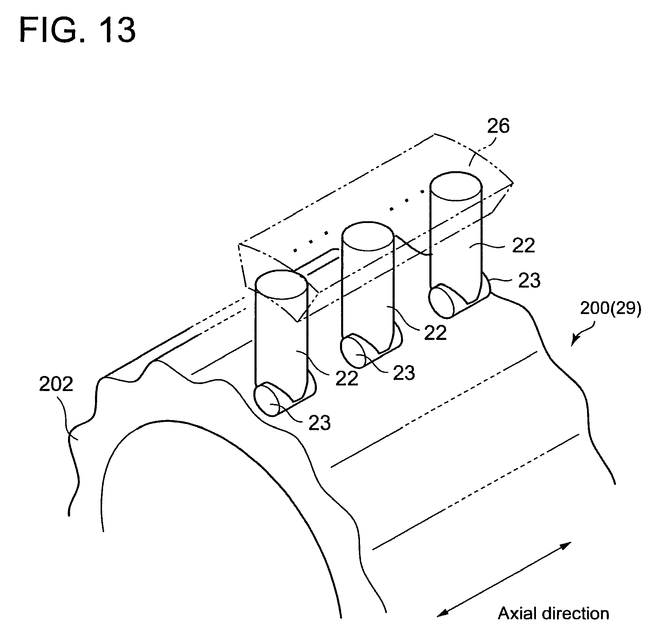

Fig. 13 is an oblique view of a machine element 29 according to one embodiment. As shown in the drawing, in one embodiment, the machine element 29 which performs a rotational motion in accordance with a reciprocating motion of the piston 22 is a ring cam 200 having a plurality of lobes 202 arranged along the circumferential direction of the hydraulic machine 20. The ring cam 200 is provided to face the N pistons 22 which reciprocate in N cylinders 24 provided in the cylinder block 26. Also, the ring cam 200 is configured to be rotatable so that the plurality of lobes 202 moves in the circumferential direction of the hydraulic machine 20 relatively with respect to the N pistons 22. In one embodiment, the ring cam 200 is attached to the rotation shaft 28 (see Fig. 2) of the hydraulic machine 200 and is configured to rotate with the rotation shaft 28.

Each of the plurality of lobes 202 of the ring cam 200 extends linearly in the axial direction of the hydraulic machine 20 over a distribution range in the axial direction of the N cylinders 24 (that is, the N pistons 22 corresponding to the N cylinders 24).

As a result, upon adopting a variety of cylinder arrangements (and corresponding piston arrangements) according to the above described embodiments, the choice for arranging the cylinders 24 in the axial direction broadens. That is, as each of the lobes 202 of the ring cam 200 extends linearly in the axial direction of the hydraulic machine 20, it is possible to arrange the axial direction of each of the cylinders 24 (pistons 22) arbitrarily over a range of the whole-length of the lobes 202.

Further, as it is possible to form the lobes 202 extending linearly in the axial direction of the hydraulic machine 20 using a surface grinder, it is easier to manufacture a ring cam 200.

As described above, according to the above embodiments, at least one of the cylinders 24 belonging to at least one cylinder row formed by m cylinders 24 arranged along the axial direction of the hydraulic machine 20 has a circumferential position varied from other cylinders 24 belonging to the same cylinder row. As a result, it is possible to secure the distance between adjacent two of the cylinders 24 while suppressing increase in size of the hydraulic machine 20 in the axial direction. Thus, it is possible to obtain sufficient strength(stiffness) of the cylinder block 26 against the torsion moment caused by the side force transmitted from the machine element 29 via the pistons 22 and the cylinders 24, for instance.

While the present invention has been described with reference to the exemplary embodiments, it is obvious to those skilled in the art that various changes may be made without departing from the scope of the invention. For instance, some of the above described embodiments may be combined.

For instance, while the above embodiment describes a hydraulic machine 20 used as at least one of the hydraulic pump 8 or the hydraulic motor 10 of a wind turbine generator 1, the usage of the hydraulic machine 20 is not limited to these.

The term "along" used in the description of the embodiments not just refers to a state of being strictly parallel in a geometric sense with respect to a reference direction or object as a reference but also includes a state of being at an angle to a certain extent with respect the reference direction or object (e.g. 45° or less).

### [Reference Signs list]

- 1: Wind turbine generator
- 2: Blade
- 3: Rotor
- 4: Hub
- 5: Hub cover
- 6: Rotation shaft
- 8: Hydraulic pump
- 10: Hydraulic motor
- 12: High pressure oil line
- 14: Low pressure oil line
- 16: Generator
- 18: Nacelle
- 19: Tower
- 20: Hydraulic machine
- 22: Piston
- 23: Contact part
- 24: Cylinder
- 25: Hydraulic chamber
- 26: Cylinder block
- 27A, 27B: Bearing
- 30A, 30B: Inner oil path
- 34: End plate
- 35A, 35B: Annular collecting line
- 36A, 36B: Outer pipe
- 42A, 42B: Annular groove
- 44: Seal member
- 46A, 46B: Communication path
- 47: First communication path
- 48: Second communication path
- 50: Cylinder block body
- 52: Sleeve hole
- 60A, 60B: Valve
- 62A, 62B: Valve body
- 200: Ring cam
- 302: Lobe

## Claims

1. A hydraulic machine (20) of a radial piston type, comprising:
N pistons (22) arranged along a radial direction of the hydraulic machine (20); and
a cylinder block (26) comprising N cylinders (24) each of which is configured to guide each of the N pistons (22) reciprocatably along the radial direction,
wherein the N cylinders (24) are arranged in the cylinder block (26) in accordance with such an arrangement that, with respect to a virtual arrangement where n virtual cylinder rows are arranged in a circumferential direction of the hydraulic machine (20) and each of the n virtual cylinder rows is formed by m virtual cylinders arranged in an axial direction of the hydraulic machine (20), at least one of the m virtual cylinders belonging to each of the n virtual cylinder rows is shifted in the circumferential direction, m being an integer not less than two, n being an integer not less than two, and N being N = m × n, wherein the hydraulic machine (20) is **characterised by** comprising:
a ring cam (200) having a plurality of lobes (302) disposed along the circumferential direction, the plurality of lobes (302) being arranged to face the N pistons (22), the ring cam (200) being configured rotatable so that the lobes (302) move relative to the N pistons (22) in the circumferential direction,
wherein each of the plurality of lobes (302) extends linearly in the axial direction over a distribution range of the N cylinders (24) in the axial direction.

2. The hydraulic machine (20) of a radial piston type according to claim 1, wherein the N cylinders (24) in the cylinder block (26) are arranged in accordance with such an arrangement that the m virtual cylinders belonging to each of the virtual cylinder rows are alternately displaced in the circumferential direction by P/2 in a staggered fashion, P being a distance in the circumferential direction between adjacent two of the virtual cylinder rows.

3. The hydraulic machine (20) of a radial piston type according to claim 1, wherein the N cylinders (24) in the cylinder block (26) are arranged in accordance with such an arrangement that positions of the m virtual cylinders belonging to each of the virtual cylinder rows are varied from one another in the circumferential direction.

4. The hydraulic machine (20) of a radial piston type according to claim 3,
wherein the N cylinders (24) in the cylinder block (26) are arranged in accordance with such an arrangement that a i^{th} virtual cylinder from an endmost cylinder in the axial direction among the m virtual cylinders belonging to each of the virtual cylinder rows is arranged with a distance P/2 in the circumferential direction from one of a (i-1)^{th} virtual cylinder or a (i+1)^{th} virtual cylinder that is disposed adjacent to the i^{th} virtual cylinder and with a distance smaller than P/2 from the other of the (i-1)^{th} virtual cylinder or the (i+1)^{th} virtual cylinder, P being a distance in the circumferential direction between adjacent two of the virtual cylinder rows.

5. The hydraulic machine (20) of a radial piston type according to claim 4,
wherein the distance in the circumferential direction between the i^{th} virtual cylinder and the other of the (i-1)^{th} virtual cylinder or the (i+1)^{th} virtual cylinder is (P/2-P/m) in such a case that m is an even number and is (P/2-P/(m+1)) in such a case that m is an odd number.

6. The hydraulic machine (20) of a radial piston type according to claim 1,
wherein the N cylinders (24) in the cylinder block (26) are helically arranged in accordance with such an arrangement that an i^{th} virtual cylinder C_{i,j} from an endmost cylinder in the axial direction belonging to a j^{th} virtual cylinder row is shifted by L×(j-1)/n in the axial direction and then a (i+1)^{th} virtual cylinder C_{i+1,j} from the endmost cylinder in the axial direction belonging to the j^{th} virtual cylinder row is shifted in the circumferential direction with respect to the virtual cylinder C_{i,j} so that the virtual cylinder C_{i+1,j} is disposed at a vertex point of an isosceles triangle having a base extending between the virtual cylinder C_{i,j} and the virtual cylinder C_{i,j+1}, where L is a distance between adjacent two of the virtual cylinders in each of the virtual cylinder rows.

7. The hydraulic machine (20) of a radial piston type according to any one of claims 1 through 6,
wherein the cylinder block (26) is formed by a single-piece member being continuous in the circumferential and axial directions.

8. A wind turbine generator (1) comprising:
at least one blade (2);
a hub (4) on which the at least one blade (2) is mounted;
a hydraulic pump (8) configured to be driven by rotation of the hub (4);
a hydraulic motor (10) configured to be driven by pressurized oil generated by the hydraulic pump (8); and
a generator (16) configured to be driven by the hydraulic motor (10),
wherein at least one of the hydraulic pump (8) or the hydraulic motor (10) is a hydraulic machine (20) of a radial piston type according to one of claims 1 to 7.

## Patentansprüche

1. Hydraulikmaschine (20) vom Radialkolbentyp, welche umfasst:
N Kolben (22), die entlang einer radialen Richtung der Hydraulikmaschine (20) angeordnet sind, und
einen Zylinderblock (26), der N Zylinder (24) umfasst, von denen jeder dazu ausgebildet ist, einen jeweiligen der N Kolben (22) entlang der radialen Richtung hin- und herbewegbar zu führen,
wobei die N Zylinder (24) gemäß einer derartigen Anordnung in dem Zylinderblock (26) angeordnet sind, dass in Bezug auf eine virtuelle Anordnung, wobei n virtuelle Zylinderreihen in einer Umfangsrichtung der Hydraulikmaschine (20) angeordnet sind und jede der n virtuellen Zylinderreihen durch m virtuelle Zylinder gebildet wird, die in einer axialen Richtung der Hydraulikmaschine (20) angeordnet sind, mindestens einer der m virtuellen Zylinder, welche zu jeder der n virtuellen Zylinderreihen gehören, in der Umfangsrichtung versetzt ist, wobei m eine Ganzzahl nicht kleiner als zwei ist, n eine Ganzzahl nicht kleiner als zwei ist und N gleich N = m × n ist,
wobei die Hydraulikmaschine (20) **dadurch gekennzeichnet ist, dass** sie umfasst:
einen Ringnocken (200) mit mehreren Lappen (302), die entlang der Umfangsrichtung angeordnet sind, wobei die mehreren Lappen (302) derart angeordnet sind, dass sie den N Kolben (22) gegenüberliegen, wobei der Ringnocken (200) drehbar ausgebildet ist, so dass sich die Lappen (302) relativ zu den N Kolben (22) in der Umfangsrichtung bewegen,
wobei sich jeder der mehreren Lappen (302) linear in der axialen Richtung über einen Verteilungsbereich der N Zylinder (24) in der axialen Richtung erstreckt.

2. Hydraulikmaschine (20) vom Radialkolbentyp nach Anspruch 1,
wobei die N Zylinder (24) in dem Zylinderblock (26) gemäß einer derartigen Anordnung angeordnet sind, dass die m virtuellen Zylinder, die zu jeder der virtuellen Zylinderreihen gehören, abwechselnd in der Umfangsrichtung auf gestaffelte Weise um P/2 versetzt sind, wobei P ein Abstand in der Umfangsrichtung zwischen zwei benachbarten der virtuellen Zylinderreihen ist.

3. Hydraulikmaschine (20) vom Radialkolbentyp nach Anspruch 1,
wobei die N Zylinder (24) in dem Zylinderblock (26) gemäß einer derartigen Anordnung angeordnet sind, dass Positionen der m virtuellen Zylinder, die zu jeder der virtuellen Zylinderreihen gehören, in der Umfangsrichtung voneinander verschieden sind.

4. Hydraulikmaschine (20) vom Radialkolbentyp nach Anspruch 3,
wobei die N Zylinder (24) in dem Zylinderblock (26) gemäß einer derartigen Anordnung angeordnet sind, dass von den m virtuellen Zylindern, die zu jeder der virtuellen Zylinderreihen gehören, ein von einem endseitigsten Zylinder in der axialen Richtung i-ter virtueller Zylinder in einem Abstand P/2 in der Umfangsrichtung von einem (i-1)-ten virtuellen Zylinder oder einem (i+1)-ten virtuellen Zylinder, der dem i-ten virtuellen Zylinder benachbart angeordnet ist, und in einem Abstand kleiner als P/2 von dem jeweils anderen des (i-1)-ten virtuellen Zylinders oder des (i+1)-ten virtuellen Zylinders angeordnet ist, wobei P ein Abstand in der Umfangsrichtung zwischen zwei benachbarten der virtuellen Zylinderreihen ist.

5. Hydraulikmaschine (20) vom Radialkolbentyp nach Anspruch 4,
wobei der Abstand in der Umfangsrichtung zwischen dem i-ten virtuellen Zylinder und dem jeweils anderen des (i-1)-ten virtuellen Zylinders oder des (i+1)-ten virtuellen Zylinders (P/2-P/m) beträgt, falls m eine gerade Zahl ist, und (P/2-P/(m+1)) beträgt, falls m eine ungerade Zahl ist.

6. Hydraulikmaschine (20) vom Radialkolbentyp nach Anspruch 1,
wobei die N Zylinder (24) in dem Zylinderblock (26) spiralförmig gemäß einer derartigen Anordnung angeordnet sind, dass ein von einem endseitigsten Zylinder in der axialen Richtung i-ter virtueller Zylinder Ci,j, der zu einer j-ten virtuellen Zylinderreihe gehört, um Lx(j-1)/n in der axialen Richtung versetzt ist, und dann ein von dem endseitigsten Zylinder in der axialen Richtung (i+1)-ter virtueller Zylinder Ci+1,j, der zu der j-ten virtuellen Zylinderreihe gehört, in der Umfangsrichtung in Bezug auf den virtuellen Zylinder Ci,j derart versetzt ist, dass der virtuelle Zylinder Ci+1,j an einer Spitze eines gleichschenkeligen Dreiecks angeordnet ist, welches eine Basis aufweist, die sich zwischen dem virtuellen Zylinder Ci,j und dem virtuellen Zylinder Ci,j+1 erstreckt, wobei L ein Abstand zwischen zwei benachbarten der virtuellen Zylinder in jeder der virtuellen Zylinderreihen ist.

7. Hydraulikmaschine (20) vom Radialkolbentyp nach einem beliebigen der Ansprüche 1 bis 6,
wobei der Zylinderblock (26) durch ein einstückiges Element gebildet wird, welches in der Umfangsrichtung und der axialen Richtung durchgehend ist.

8. Windkraftanlage (1), umfassend:
mindestens ein Rotorblatt (2),
eine Nabe (4), an welcher das mindestens eine Rotorblatt (2) angebracht ist,
eine Hydraulikpumpe (8), die dazu ausgebildet ist, durch Drehung der Nabe (4) angetrieben zu werden,
einen Hydraulikmotor (10), der dazu ausgebildet ist, durch Drucköl angetrieben zu werden, welches durch die Hydraulikpumpe (8) erzeugt wird, und
einen Generator (16), der dazu ausgebildet ist, durch den Hydraulikmotor (10) angetrieben zu werden,
wobei mindestens einer aus der Gruppe umfassend die Hydraulikpumpe (8) und den Hydraulikmotor (10) eine Hydraulikmaschine (20) vom Radialkolbentyp nach einem der Ansprüche 1 bis 7 ist.

## Revendications

1. Machine hydraulique (20) du type à piston radial, comportant :
N pistons (22) disposés le long d'une direction radiale de la machine hydraulique (20) ; et
un bloc de cylindres (26) comportant N cylindres (24) dont chacun est configuré pour guider chacun des N pistons (22) en va-et-vient le long de la direction radiale,
dans laquelle les N cylindres (24) sont disposés dans le bloc de cylindres (26) selon un agencement tel que, par rapport à un agencement virtuel où n rangées de cylindres virtuels sont disposées dans une direction circonférentielle de la machine hydraulique (20) et chacune des n rangées de cylindres virtuels est formée par m cylindres virtuels disposés dans une direction axiale de la machine hydraulique (20), au moins un des m cylindres virtuels appartenant à chacune des n rangées de cylindres virtuels est décalé dans la direction circonférentielle, m étant un nombre entier qui n'est pas inférieur à deux, n étant un nombre entier qui n'est pas inférieur à deux, et N étant N = m x n,
la machine hydraulique (20) étant **caractérisée en ce qu'**elle comporté :
une came annulaire (200) ayant une pluralité de lobes (302) disposés le long de la direction circonférentielle, la pluralité de lobes (302) étant prévue pour faire face aux N pistons (22), la came annulaire (200) étant configurée de façon rotative de telle sorte que les lobes (302) se déplacent par rapport aux N pistons (22) dans la direction circonférentielle,
dans laquelle chaque lobe de la pluralité de lobes (302) s'étend linéairement dans la direction axiale sur une plage de distribution des N cylindres (24) dans la direction axiale.

2. Machine hydraulique (20) du type à piston radial selon la revendication 1, dans laquelle les N cylindres (24) dans le bloc de cylindres (26) sont disposés selon un agencement tel que les m cylindres virtuels appartenant à chacune des rangées de cylindres virtuels sont alternativement déplacés dans la direction circonférentielle de P/2 d'une manière décalée, P étant une distance dans la direction circonférentielle entre deux rangées de cylindres virtuels adjacentes.

3. Machine hydraulique (20) du type à piston radial selon la revendication 1, dans laquelle les N cylindres (24) dans le bloc de cylindres (26) sont disposés selon un agencement tel que des positions des m cylindres virtuels appartenant à chacune des rangées de cylindres virtuels sont modifiées l'une par rapport à l'autre dans la direction circonférentielle.

4. Machine hydraulique (20) du type à piston radial selon la revendication 3, dans laquelle les N cylindres (24) dans le bloc de cylindres (26) sont disposés selon un agencement tel qu'un i^{ème} cylindre virtuel d'un cylindre le plus à l'extrémité dans la direction axiale parmi les m cylindres virtuels appartenant à chacune des rangées de cylindres virtuels est disposé avec une distance P/2 dans la direction circonférentielle par rapport un (i-1)^{ème} cylindre virtuel ou (i+1)^{ème} cylindre virtuel qui est disposé de façon adjacente au i^{ème} cylindre virtuel et avec une distance plus petite que P/2 par rapport à l'autre du (i-1)^{ème} cylindre virtuel ou du (i+1)^{ème} cylindre virtuel, P étant une distance dans la direction circonférentielle entre deux des rangées de cylindres virtuels adjacentes.

5. Machine hydraulique (20) du type à piston radial selon la revendication 4, dans laquelle la distance dans la direction circonférentielle entre le i^{ème} cylindre virtuel et l'autre du (i-1)^{ème} cylindre virtuel ou du (i+1)^{ème} cylindre virtuel est (P/2-P/m) dans un cas tel que m est un nombre pair et est (P/2-P/(m+1)) dans un cas tel que m est un nombre impair.

6. Machine hydraulique (20) du type à piston radial selon la revendication 1, dans laquelle les N cylindres (24) dans le bloc de cylindres (26) sont disposés de manière hélicoïdale selon un agencement tel qu'un j^{ème} cylindre virtuel Cᵢⱼ par rapport à un cylindre le plus à l'extrémité dans la direction axiale appartenant à une j^{ème} rangée de cylindres virtuels est décalé de L x (j-1)/n dans la direction axiale et alors un (i+1)^{ème} cylindre virtuel Cᵢ₊₁ⱼ par rapport au cylindre le plus à l'extrémité dans la direction axiale appartenant à la j^{ème} rangée de cylindres virtuels est décalé dans la direction circonférentielle par rapport au cylindre virtuel Cᵢⱼ de telle sorte que le cylindre virtuel Cᵢ₊ᵢⱼ est disposé au niveau d'un sommet d'un triangle isocèle ayant une base s'étendant entre le cylindre virtuel Cᵢⱼ et le cylindre virtuel Cᵢⱼ₊ᵢ, où L est une distance entre deux des cylindres virtuels adjacents dans chacune des rangées de cylindres virtuels.

7. Machine hydraulique (20) du type à piston radial selon l'une quelconque des revendications 1 à 6, dans laquelle le bloc de cylindres (26) est formé par un élément d'une seule pièce qui est continu dans les directions circonférentielle et axiale.

8. Eolienne (1) comportant :
au moins une pale (2) ;
un moyeu (4) sur lequel la au moins une pale (2) est montée ;
une pompe hydraulique (8) configurée pour être entraînée par la rotation du moyeu (4) ;
un moteur hydraulique (10) configuré pour être entraîné par de l'huile sous pression générée par la pompe hydraulique (8) ; et
une génératrice (16) configurée pour être entraînée par le moteur hydraulique (10),
dans laquelle au moins un de la pompe hydraulique (8) ou du moteur hydraulique (10) est une machine hydraulique (20) du type à piston radial selon l'une des revendications 1 à 7.
